# EUROPEAN PATENT APPLICATION

(11) **EP 1 445 776 A1**
(43) Date of publication of application: **11.08.2004**
(21) Application number: 03002733.8
(22) Date of filing: 06.02.2003
(51) Int. Cl.: G12B 11/00, G01D 11/28

(54) **Multisectioned Indicator**

(71) Applicant: SIEMENS AKTIENGESELLSCHAFT, 80333 München (DE)
(72) Inventor: Angermüller, Helmut, Dr., 61440 Oberursel (DE); Uerdingen, Bernd, 63110 Rodgau (DE)

(57) **Abstract**

In a display apparatus comprising gradations and an indicator which points to select gradations in response to select conditions said indicator is segmented into a plurality of light conducting segments, each of said segments being optically insulated from another.

## Description

The present invention relates to the field of multisection indicators and more particularly to an analog indicator for a multifunction display which is capable of having select sections illuminated.

Current instruments comprise either an analog and/or digital display. Analog displays comprise the commonly seen needle rotating about a center point and pointing to a particular number or figure. The number or figure represents a condition that is being monitored. Digital displays may comprise electrically illuminated LEDs and the like for graphical representations. A common use for graphical digital displays is with navigation assistance, wherein for example a map and indicator arrows are depicted. Digital displays have the advantage of flexibility, namely, different backgrounds and/or displays may be presented with the same instrument. An analog alternative would require individual meters for each particular situation.

Space within navigational stations, aboard motor vehicles for example, is limited. Therefore, it is advantages to maximize use of the available space by combining functions of display units, for example analog with digital presentation capacity. A major disadvantage to multifunctioning display units is that the pointer interferes with or obstructs the view of the graphical display. This problem renders many multifunctional display devices useless, as the graphical representation must somehow be squeezed into areas not covered by the dial. One known solution is to operate just the analog and graphical representations separately and on the same display or dial. This assumes no interference from the indicator even at non-use or rest. However, a problem still exists in that many applications require or would be enhanced by both modes of presentation operating simultaneously.

The task of the present invention and solution to the above problem is set out in the claims. In particular, the present invention comprises a method and apparatus for selectively illuminated display indicator, wherein said indicator is segmented into a plurality of light conducting segments, each of said segments being optically insulated from another. As set out in the dependent claims, the segments further comprise light coupling means for conducting light into said segments and/or the segments further comprise electrical coupling means. Accordingly, the indicator may comprise an optical coupling material and/or electroluminescent material.

The present invention will be described with respect to the drawings which depict the following.

Figure 1 depicts a cross section of an indicator according to a first embodiment of the present invention.

Figure 2 depicts a cross section of an indicator according to another embodiment of the present invention.

Figure 3 depicts a top view of a segmented indicator according to the invention.

Figure 4 depicts a first operational view of the present invention.

Figure 5 depicts a second operational view of the present invention.

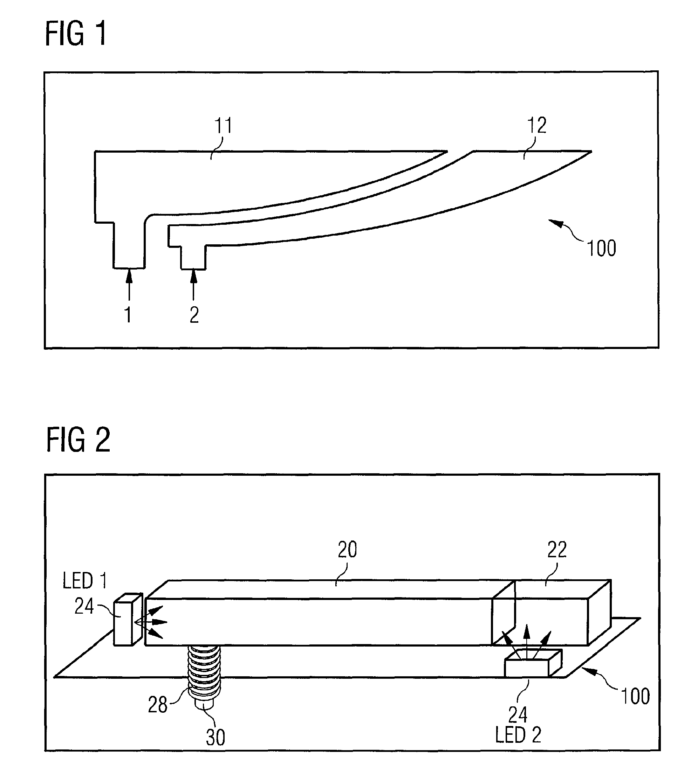

The present invention comprises a segmented indicator for a display. The indicator is segmented into light insulated segments. As shown in the figure, the indicator is depicted as being segmented into two segments, however, the number of segments may comprise practically any number limited only by design. Figure 1 depicts a side view of indicator 100 segmented into two segments 11 and 12, respectively. The two segments 11 and 12 are made of light conducting material known in the art. One or both segments may be made transparent. Both segments comprises a planar top and combine to form an approximately continuous top. As will be shown, an exaggerated break is depicted between the two segments, however, such break can be compensated for with manufacturing and/or lighting so as to give off an impression of continuity, upon design. In another embodiment, the top need not be planar nor approximately continuous. Bottom portions of segments 11 and 12 are depicted as being curved, however, this too is a matter of design choice provided the functionality described herein is respected. Both segments include coupling means indicated by arrows 1 and 2. In the depicted embodiment, the coupling means comprise optical coupling means and are capable of conducting light into and thereby illuminating segments 11 and 12. The optical coupling means are made from materials and methods known in the art. By selectively coupling active light sources to the light coupling means 1 and 2, either or both segments can be made to selectively illuminate. Furthermore, the color of light and intensity may be regulated at the optical source prior to coupling. The indicator may be mounted at left side walls or other location which facilitates radial movement within an approximate horizontal plane as viewed from above of the top of the combined segments.

Figure 2 depicts a second embodiment of the present invention. Herein, the indicator 100 is depicted segmented into two portions 20 and 22 and having individual light sources 24 and 26 optically coupled thereto (as indicated by the respective arrows). The LEDs include power source(s) not shown in the figure. As depicted, the two portions 20 and 22 may be made from a light conducting material. Alternatively, the two portions may be made from an electronluminescent material. Electricity to the two portions is provided via conductor 28 wrapped around stem 30. Stem 30 facilitates rotational movement of the indicator 100. (DEAR INVENTOR, PLEASE CONFIRM THE LAST TWO SENTENCES. THANKS.). The segments can be made to illuminate at select colors and intensities depending upon the electroluminescent material as would be known to one skilled in the art. As another alternative, the various segments may comprise either eletroluminescent and light conducting material or both thereby facilitating alternate illuminating means.

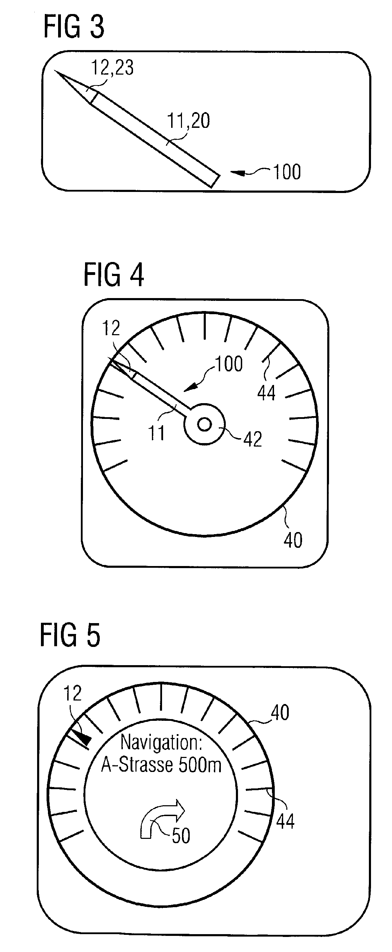

Figure 3 depicts a top view of an indicator according to figures 1 and 2. Herein, the two segments, 12, 22 and 11, 20 are depicted as illuminated. A small break between the two segmented is depicted, somewhat exaggerated, to demonstrate the different segments.

Figure 4 depicts a first display mode or normal display mode. Dial 40 includes gradations 44 for which indicator 100 points to as the indicator 100 rotates about central point 42. The operation of the display itself is known in the art. In this mode, the indicator 100 is illuminated by any of the above described methods. The color of the indicator may selectively change to become more vibrant and/or intense when an alarming condition is occurring or about to occur. The vibrant color(s) and/or intensity will serve to visually alert the human operator. The color(s), intensity, and condition for their occurrence can be set, by means known in the art, to meet specific individual situations. For example, the tip can be made bright red when a certain high speed is being approached.

Figure 5 depicts a display mode. Herein, the display 40 includes a central circular graphical display portion 50 wherein graphical information is presented. In this mode, segment 11, 20 is turned off so as to reveal only segment 12, 22 (as shown). The indicator 100 continues to operate in pointing to gradations 44 of display 40. At the same time, the graphical display is made to present select information. As depicted, the information comprises an arrow and text indicating an appropriate navigational direction.

## Claims

1. A display apparatus comprising gradations and an indicator which points to select gradations in response to select conditions **characterized in that** said indicator is segmented into a plurality of light conducting segments, each of said segments being optically insulated from another.

2. The apparatus according to claim 1, wherein said segments further comprise light coupling means for conducting light into said segments.

3. The apparatus according to claim 2, further comprising at least one light source coupled at least one of said light conducting means for selectively illuminating at least one of said segments in a preselected color and intensity.

4. The apparatus according to claim 3, wherein said light source comprises a light emitting diode.

5. The apparatus according to claims 1-4, wherein said segments further comprise electrical coupling means.

6. The apparatus according to claim 5, wherein said segments comprise electroluminescent material and said apparatus further comprises electrical generating means coupled to said coupling means for coupling electricity to said segments so as to selectively cause at least one of said segments to illuminate.

7. The apparatus according to claim 6, wherein said electroluminescent material comprises at least one light emitting diode.

8. The apparatus according to claims 1-7 wherein at least one of said segments is transparent.

9. The apparatus according to claims 1-8 further comprising a graphical display portion located proximate to said gradations.

10. A method according to any one of claims 1-9 for making said apparatus.
